# EUROPÄISCHE PATENTANMELDUNG

(11) **EP 3 501 687 A1**
(43) Veröffentlichungstag der Anmeldung: **26.06.2019**
(21) Anmeldenummer: 17209839.4
(22) Anmeldetag: 21.12.2017
(51) Int. Cl.: B21G 3/16, B21G 3/20, F16B 15/06

(54) **VERFAHREN UND VORRICHTUNG ZUR HERSTELLUNG VON NÄGELN SOWIE NAGEL**

(71) Anmelder: HILTI Aktiengesellschaft, 9494 Schaan (LI)
(72) Erfinder: Schroeder, Florian, 7304 Maienfeld (CH); Domani, Guenter, 88138 Weissensberg (DE); Rong, Pingyan, 6800 Feldkirch (AT)
(74) Vertreter: Hilti Aktiengesellschaft Corporate Intellectual Property

(57) **Zusammenfassung**

Vorrichtung und Verfahren zur Herstellung eines Nagels, bei dem ein Draht unter Bildung einer Nagelspitze zwischen mehreren Kneifwerkzeugen eingequetscht wird, wobei der Nagel einen Schaftabschnitt, welcher eine Längsachse definiert, und einen in Bezug auf die Längsachse zwischen dem Schaft und der Nagelspitze angeordneten Spitzenabschnitt aufweist, wobei der Spitzenabschnitt eine Oberfläche hat, welche relativ zu der Längsachse um einen spitzen Winkel geneigt ist, welcher entlang der Längsachse, ausgehend von der Nagelspitze, abnimmt und danach wieder zunimmt. Die Erfindung betrifft auch einen Nagel.

## Beschreibung

### Technisches Gebiet

Die Erfindung betrifft ein Verfahren sowie eine Vorrichtung zur Herstellung von Nägeln. Die Erfindung betrifft des Weiteren einen Nagel.

### Stand der Technik

Eine Anordnung zum Ablängen von Nagelrohlingen von einem Draht unter gleichzeitiger Ausbildung der Nagelspitze ist zum Beispiel aus der deutschen Patentschrift DE 10 2010 011 735 B3 bekannt. Diese Anordnung umfasst eine Schneideinrichtung, die zwei einander bezüglich der Drahtlängsachse gegenüberliegende, zueinander gegenläufige Schneidwerkzeuge aufweist. Jedes der Schneidwerkzeuge hat ein Schneidmesser, welches von einem Träger gehalten ist. Zum Ablängen der Nagelrohlinge bewegen sich die Schneidmesser auf einer jeweils elliptischen Bahn aufeinander zu.

Bei bekannten Verfahren und Vorrichtungen wird ein Teil des Drahtmaterials in einen Zwischenraum zwischen jeweils zwei Schneidwerkzeugen gequetscht und bildet dort einen unerwünschten Butzen, welcher von dem Nagel absteht und zum Teil unter Bildung einer Abscherfläche abbricht.

### Darstellung der Erfindung

Aufgabe der Erfindung ist es, die Herstellung von Nägeln zu vereinfachen und/oder zu verbessern.

Die Aufgabe ist gelöst bei einem Verfahren zur Herstellung eines Nagels, bei dem ein Draht unter Bildung einer Nagelspitze zwischen mehreren Kneifwerkzeugen eingequetscht wird, wobei der Nagel einen Schaftabschnitt, welcher eine Längsachse definiert, und einen in Bezug auf die Längsachse zwischen dem Schaft und der Nagelspitze angeordneten Spitzenabschnitt aufweist, wobei der Spitzenabschnitt eine Oberfläche hat, welche relativ zu der Längsachse um einen spitzen Winkel geneigt ist, welcher entlang der Längsachse, ausgehend von der Nagelspitze, abnimmt und danach wieder zunimmt. Bevorzugt nimmt der Winkel stufenlos ab.

Die Aufgabe ist ebenfalls gelöst bei einer Vorrichtung zur Herstellung eines Nagels, umfassend mindestens zwei Kneifwerkzeuge, zwischen denen ein Draht unter Bildung einer Nagelspitze einquetschbar ist, wobei die Kneifwerkzeuge einen Schaftabschnitt, welcher eine Längsachse definiert, und einen in Bezug auf die Längsachse zwischen dem Schaft und der Nagelspitze angeordneten Spitzenabschnitt definieren, wobei der Spitzenabschnitt eine Oberfläche hat, welche relativ zu der Längsachse um einen Winkel geneigt ist, welcher entlang der Längsachse, ausgehend von der Nagelspitze, abnimmt und danach wieder zunimmt. Bevorzugt nimmt der Winkel stufenlos ab.

Die Aufgabe ist auch gelöst bei einem Nagel mit einer Nagelspitze, mit einem Schaftabschnitt, welcher eine Längsachse definiert, und mit einem in Bezug auf die Längsachse zwischen dem Schaft und der Nagelspitze angeordneten Spitzenabschnitt, wobei der Spitzenabschnitt eine Oberfläche hat, welche relativ zu der Längsachse um einen spitzen Winkel geneigt ist, welcher entlang der Längsachse, ausgehend von der Nagelspitze, abnimmt und danach wieder zunimmt. Bevorzugt weist der Nagel einen Grat und/oder eine Abscherfläche auf, wobei der Winkel nur in einem Umgebungsbereich des Grates beziehungsweise der Abscherfläche wieder zunimmt. Ebenso bevorzugt nimmt der Winkel auf einem gesamten Umfang des Spitzenabschnitts wieder zu.

Die Erfindung macht sich die Erkenntnis zunutze, dass der entstehende Butzen eine umso grössere Dicke aufweist, je kleiner der spitze Winkel zwischen der Nageloberfläche und der Längsachse ist. In einem in Bezug auf die Längsachse radial äusseren Bereich, in dem ohnehin weniger Drahtmaterial in den Zwischenraum zwischen zwei Kneifwerkzeugen gequetscht wird, wirkt sich eine zu grosse Dicke des Butzens dahingehend aus, dass der Butzen unter Umständen nicht automatisch abbricht. Durch die Zunahme des besagten Winkels wird sichergestellt, dass in einem radial äusseren Bereich des Spitzenabschnitts die Dicke des Butzen klein ist, so dass der Butzen auch dann automatisch abbricht, wenn der Spitzenabschnitt eine Form aufweist, bei welcher der besage Winkel zunächst abnimmt.

Eine vorteilhafte Ausführungsform ist dadurch gekennzeichnet, dass der Winkel bis auf einen Wert kleiner als 20°, bevorzugt kleiner als 10°, besonders bevorzugt kleiner als 5° abnimmt und danach wieder auf einen Wert grösser als 5°, bevorzugt grösser als 10°, besonders bevorzugt grösser als 20°, zunimmt.

Eine vorteilhafte Ausführungsform ist dadurch gekennzeichnet, dass der Winkel auf einem gesamten Umfang des Spitzenabschnitts wieder zunimmt. Bei einer alternativen Ausführungsform nimmt der Winkel nur in einem Randbereich der Kneifwerkzeuge wieder zu.

Eine vorteilhafte Ausführungsform ist dadurch gekennzeichnet, dass der Schaftabschnitt zylinderförmig ausgebildet ist und die Längsachse eine Symmetrieachse der Zylinderform ist. Eine weitere vorteilhafte Ausführungsform ist dadurch gekennzeichnet, dass der Draht fortlaufend in zwischen mindestens zwei Walzen hindurchgeführt wird, und wobei die Kneifwerkzeuge an den Walzen angeordnet sind. Die Vorrichtung umfasst dementsprechend zwei Walzen, an welchen die Kneifwerkzeuge angeordnet sind.

### Ausführungsbeispiele

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Fig. 1: eine Herstellungsvorrichtung für Nägel,
- Fig. 2: einen Nagel in einer Schnittansicht während seiner Herstellung,
- Fig. 3: ein Kneifwerkzeug in einer Draufsicht,
- Fig. 4: das Kneifwerkzeug aus Fig. 3 in einer Schnittansicht und
- Fig. 5: einen Nagel in einer teilweisen Seitenansicht.

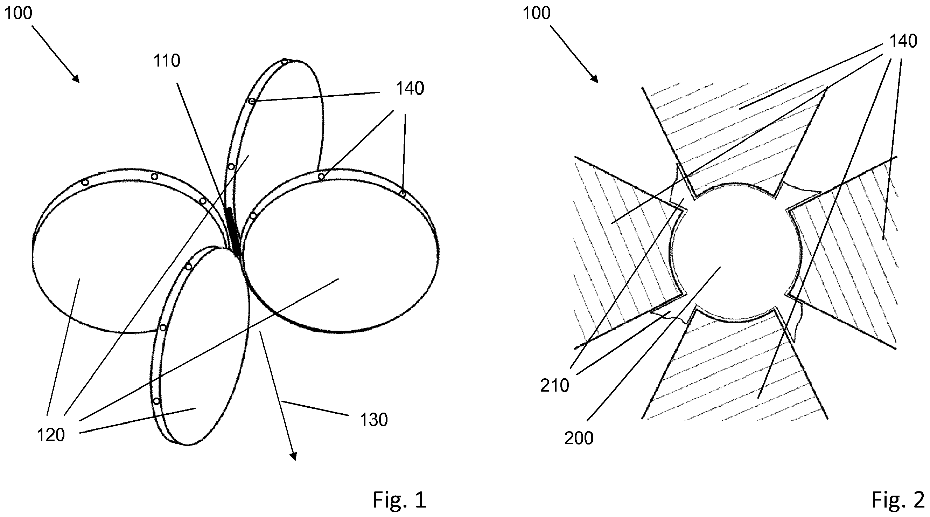

In Figur 1 ist eine Vorrichtung 100 zur Herstellung von Nägeln aus einem Draht 110 dargestellt. Die Vorrichtung 100 weist vier rotierende Walzen 120 auf, zwischen denen der Draht 110 fortlaufend in einer Zugrichtung 130 hindurchführbar ist. Zum Ablängen der Nägel von dem Draht 110 weist jede der Walzen 120 mehrere Kneifwerkzeuge 140 auf, welche am Umfang der jeweiligen Walze 120 angebracht sind. Beim Durchführen zwischen den Walzen 120 wird ein erster Abschnitt des Drahtes 110 gleichzeitig zwischen den Kneifwerkzeugen 140 aller vier Walzen 120 eingequetscht, um eine Nagelspitze zu formen und von dem Draht 110 abzutrennen. In einem nachfolgenden Schritt wird auf einem der Spitze gegenüberliegenden Ende jedes Nagels ein Nagelkopf angeformt, beispielsweise durch Stauchen.

In Fig. 2 ist ein Nagel 200 im Querschnitt dargestellt, während er in der Vorrichtung 100 hergestellt wird, insbesondere zwischen den Kneifwerkzeugen 140 aller vier Walzen eingequetscht wird. Aufgrund des gleichzeitigen Einquetschens zwischen mehreren Kneifwerkzeugen 140 fliesst ein Teil des Drahtmaterials in Zwischenräume zwischen den Kneifwerkzeugen 140 und bildet jeweils einen Butzen 210. Bei einem nicht gezeigten Ausführungsbeispiel wird der Nagel zwischen zwei oder drei Kneifwerkzeugen eingequetscht.

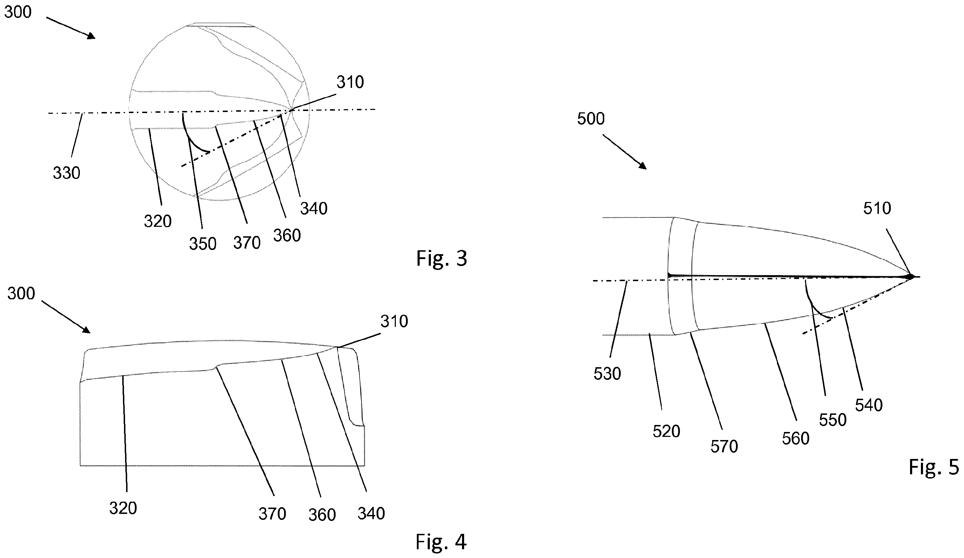

In den Fig. 3 und 4 ist ein Kneifwerkzeug 300 mit Kneif- oder Schneidkanten 301, 302, 303, 304 in einer Draufsicht (Fig. 3) beziehungsweise in einer Schnittansicht (Fig. 4) dargestellt. Zwischen dem Kneifwerkzeug 300 und einem nicht gezeigten weiteren Kneifwerkzeug mit gleicher Form ist ein Draht unter Bildung einer Nagelspitze 310 einquetschbar. Das Kneifwerkzeug 300 weist einen zylinderförmigen, insbesondere kreiszylinderförmigen Schaftabschnitt 320 auf, welcher mit seiner Symmetrieachse eine Längsachse 330 definiert, und einen in Bezug auf die Längsachse 330 zwischen dem Schaftabschnitt 320 und der Nagelspitze 310 angeordneten Spitzenabschnitt 340 auf, wobei der Spitzenabschnitt 340 eine Oberfläche hat, welche relativ zu der Längsachse 330 um einen Winkel 350 geneigt ist, welcher entlang der Längsachse 330, ausgehend von der Nagelspitze 310, in einem radial inneren Bereich 360 stufenlos bis auf einen Wert von 5° abnimmt und danach in einem radial äusseren Bereich 370 wieder bis auf einen Wert von 30° zunimmt. Anhand von Fig. 4 ist zu sehen, dass der Winkel 350 auf einem gesamten Umfang des Spitzenabschnitts 340 wieder zunimmt. Bei nicht gezeigten Ausführungsbeispielen nimmt der Winkel nur in einem Randbereich der Kneifwerkzeuge wieder zu. Der Spitzenabschnitt 340 schliesst sich unmittelbar an den Schaftabschnitt 320 an und beginnt dort, wo die Zylinderform des Schaftabschnitts 320 endet.

In Fig. 5 ist ein Nagel 500 mit einer Nagelspitze 510, einem Schaftabschnitt 520, welcher eine Längsachse 530 definiert, und einem in Bezug auf die Längsachse 530 zwischen dem Schaftabschnitt 520 und der Nagelspitze 510 angeordneten Spitzenabschnitt 540, wobei der Spitzenabschnitt 540 eine Oberfläche hat, welche relativ zu der Längsachse 530 um einen spitzen Winkel 550 geneigt ist. Der Winkel 550 nimmt entlang der Längsachse 530, ausgehend von der Nagelspitze 510, ab und danach wieder zu. Der Nagel 500 weist einen eine Abscherfläche 580 auf, wobei der Winkel 550 in einem Umgebungsbereich der Abscherfläche 580 wieder zunimmt.

Die Erfindung wurde anhand einer Reihe von Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass die erfindungsgemässe Vorrichtung und das erfindungsgemässe Verfahren auch für andere Anwendungen einsetzbar sind.

## Patentansprüche

1. Verfahren zur Herstellung eines Nagels, bei dem ein Draht unter Bildung einer Nagelspitze zwischen mehreren Kneifwerkzeugen eingequetscht wird, wobei der Nagel einen Schaftabschnitt, welcher eine Längsachse definiert, und einen in Bezug auf die Längsachse zwischen dem Schaftabschnitt und der Nagelspitze angeordneten Spitzenabschnitt aufweist, wobei der Spitzenabschnitt eine Oberfläche hat, welche relativ zu der Längsachse um einen spitzen Winkel geneigt ist, welcher entlang der Längsachse, ausgehend von der Nagelspitze, abnimmt und danach wieder zunimmt.

2. Verfahren nach Anspruch 1, wobei der Winkel auf einem gesamten Umfang des Spitzenabschnitts wieder zunimmt.

3. Verfahren nach Anspruch 1, wobei der Winkel nur in einem Randbereich der Kneifwerkzeuge wieder zunimmt.

4. Verfahren nach einem der vorhergehenden Ansprüche, wobei der Draht fortlaufend in zwischen mindestens zwei Walzen hindurchgeführt wird, und wobei die Kneifwerkzeuge an den Walzen angeordnet sind.

5. Vorrichtung zur Herstellung eines Nagels, umfassend mindestens zwei Kneifwerkzeuge, zwischen denen ein Draht unter Bildung einer Nagelspitze einquetschbar ist, wobei die Kneifwerkzeuge einen Schaftabschnitt, welcher eine Längsachse definiert, und einen in Bezug auf die Längsachse zwischen dem Schaftabschnitt und der Nagelspitze angeordneten Spitzenabschnitt definieren, wobei der Spitzenabschnitt eine Oberfläche hat, welche relativ zu der Längsachse um einen Winkel geneigt ist, welcher entlang der Längsachse, ausgehend von der Nagelspitze, abnimmt und danach wieder zunimmt.

6. Vorrichtung nach Anspruch 5, wobei der Winkel stufenlos abnimmt.

7. Vorrichtung nach einem der Ansprüche 5 bis 6, wobei der Winkel auf einem gesamten Umfang des Spitzenabschnitts wieder zunimmt.

8. Vorrichtung nach einem der Ansprüche 5 bis 6, wobei der Winkel nur in einem Randbereich der Kneifwerkzeuge wieder zunimmt.

9. Vorrichtung nach einem der Ansprüche 5 bis 8, wobei der Schaftabschnitt zylinderförmig ausgebildet ist und die Längsachse eine Symmetrieachse der Zylinderform ist.

10. Nagel mit einer Nagelspitze, mit einem Schaftabschnitt, welcher eine Längsachse definiert, und mit einem in Bezug auf die Längsachse zwischen dem Schaftabschnitt und der Nagelspitze angeordneten Spitzenabschnitt, wobei der Spitzenabschnitt eine Oberfläche hat, welche relativ zu der Längsachse um einen Winkel geneigt ist, welcher entlang der Längsachse, ausgehend von der Nagelspitze, abnimmt und danach wieder zunimmt.

11. Nagel nach Anspruch 10, wobei der Winkel stufenlos abnimmt.

12. Nagel nach einem der Ansprüche 10 bis 11, wobei der Winkel bis auf einen Wert kleiner als 20°, insbesondere kleiner als 10°, insbesondere kleiner als 5° abnimmt und danach wieder auf einen Wert grösser als 5°, insbesondere grösser als 10°, insbesondere grösser als 20°, zunimmt.

13. Nagel nach einem der Ansprüche 10 bis 12, wobei der Winkel auf einem gesamten Umfang des Spitzenabschnitts wieder zunimmt.

14. Nagel, nach einem der Ansprüche 10 bis 12 wobei der Nagel einen Grat und/oder eine Abscherfläche aufweist, und wobei der Winkel nur in einem Umgebungsbereich des Grates beziehungsweise der Abscherfläche wieder zunimmt.

15. Nagel nach einem der Ansprüche 10 bis 14, wobei der Schaftabschnitt zylinderförmig ausgebildet ist und die Längsachse eine Symmetrieachse der Zylinderform ist.
